(19) **Europäisches Patentamt**

**European Patent Office**

**Office européen des brevets**

(11) **EP 1 388 215 B1**

(12) **EUROPÄISCHE PATENTSCHRIFT**

(45) Veröffentlichungstag und Bekanntmachung des Hinweises auf die Patenterteilung:
**10.05.2006 Patentblatt 2006/19**

(21) Anmeldenummer: **02742742.6**

(22) Anmeldetag: **10.05.2002**

(51) Int Cl.:
**H04B 1/707** $^{(2006.01)}$

(86) Internationale Anmeldenummer:
**PCT/DE2002/001697**

(87) Internationale Veröffentlichungsnummer:
**WO 2002/093766 (21.11.2002 Gazette 2002/47)**

(54) **MEHRTEILNEHMER-DETEKTION MITTELS RAKE-EMPFÄNGER-STRUKTUR**

MULTI-SUBSCRIBER DETECTION BY MEANS OF A RAKE RECEIVER STRUCTURE

DETECTION MULTI-UTILISATEUR AU MOYEN D'UNE STRUCTURE DE RECEPTEUR RAKE

(84) Benannte Vertragsstaaten:
**AT BE CH CY DE DK ES FI FR GB GR IE IT LI LU MC NL PT SE TR**

(30) Priorität: **14.05.2001 DE 10123333**

(43) Veröffentlichungstag der Anmeldung:
**11.02.2004 Patentblatt 2004/07**

(73) Patentinhaber: **Infineon Technologies AG**
**81669 München (DE)**

(72) Erfinder:
- **JUNG, Peter**
  **67697 Otterberg (DE)**
- **KELLA, Tideya**
  **80337 München (DE)**
- **PLECHINGER, Jörg**
  **80469 München (DE)**
- **RUPRICH, Thomas**
  **80796 München (DE)**
- **SCHNEIDER, Michael**
  **81541 München (DE)**

(74) Vertreter: **Lange, Thomas et al**
**Patentanwälte**
**Lambsdorff & Lange**
**Dingolfinger Strasse 6**
**81673 München (DE)**

(56) Entgegenhaltungen:
**EP-A- 0 978 951**          **WO-A-00/60760**
**WO-A-00/67442**          **AU-A- 5 649 800**

- **KOULAKIOTIS D.; AGHVAMI A.H.: 'Data Detection Techniques for DS/CDMA Mobile Systems: A Review' IEEE PERSONAL COMMUNICATIONS Bd. 7, Nr. 3, Juni 2000, IEEE COMMUNICATIONS SOCIETY, US, Seiten 24 - 34, XP000947007**

**Beschreibung**

Die Erfindung betrifft ein Verfahren zur Verminderung des Signalverarbeitungsaufwands bei Mehrteilnehmer-Detektion mittels einer RAKE-Empfänger-Struktur und eine RAKE-Empfänger-Struktur für die Mehrteilnehmer-Detektion mit vermindertem Signalverarbeitungsaufwand.

Der Einsatz von Mehrteilnehmer-Detektionstechniken, auch als JD-(Joint Detection-)Entzerrung bezeichnet, ermöglicht einerseits hohe Nutzdatenraten in Mobilfunksystemen, andererseits erfordern JD-Entzerrungsverfahren einen extrem hohen Signalverarbeitungsaufwand. Bei CDMA-(Code Division Multiple Access-)Systemen, etwa bei UMTS (Universal-Mobile-Telecommunications-System), ergeben sich die hohen Nutzdatenraten durch die Möglichkeit, kurze Spreizcodes zu verwenden und damit hohe Symbolraten zu erzielen. Der extrem hohe Signalverarbeitungsaufwand einer JD-Entzerrung beruht auf dem Funktionsprinzip der JD-Entzerrung. Dieses besteht darin, die durch andere aktive Mobilfunkteilnehmer verursachten Störungen (sogenannte Intrazell-Interferenz) durch explizite Detektion dieser Teilnehmersignale zu eliminieren. Das heisst, durch Ausnutzen der Tatsache, dass die durch die Aktivitäten anderer Teilnehmer verursachten Störungen deterministisch (kein Rauschen) sind, können diese Störungen erheblich verringert oder im Idealfall eliminiert werden.

Der extrem hohe Signalverarbeitungsaufwand macht bisher den Einsatz von JD-Algorithmen in Mobilstationen nahezu unmöglich. Die gegenwärtig in Mobilstationen eingesetzten Signalprozessoren sind für bekannte JD-Algorithmen zu wenig leistungsfähig. Ihr Ersatz durch leistungsfähigere (und damit teurere) Signalprozessoren erscheint zu Zeit ebenfalls nicht realisierbar, da in diesem Fall ein zu hoher Stromverbrauch auftreten würde.

Neben der gleichzeitigen Aktivität mehrerer Mobilfunkteilnehmer besteht eine weitere Besonderheit im Mobilfunk darin, dass Funksignale der Mehrwege-Ausbreitung unterliegen. Das heisst, dass durch Reflexion, Streuung und Beugung des gesendeten Funksignals an diversen Hindernissen im Ausbreitungsweg am Empfänger mehrere Signal-Empfangsversionen auftreten, die zeitlich zueinander verschoben und unterschiedlich abgeschwächt sind. Das Funktionsprinzip eines RAKE-Empfängers beruht darauf, diese Empfangssignal-Versionen (Pfade) getrennt auszuwerten und dann zeitrichtig zu überlagern. Die Bezeichnung RAKE ("Harke") beschreibt dabei in bildhafter Weise die Struktur eines solchen Empfängers, wobei die "Zinken" der Harke die RAKE-Finger repräsentieren und der "Stiel" der Harke das ausgangsseitig bereitgestellte, überlagerte Empfangssignal darstellt.

Mit RAKE-Empfängern lassen sich ausgezeichnete Detektionsergebnisse erzielen. Problematisch für den Mobilfunk ist jedoch ihr hoher Stromverbrauch, der auf die parallele Struktur der RAKE-Finger und dem dadurch vervielfachten Signalverarbeitungsaufwand zurückzuführen.ist.

Ein Verfahren zur JD-Entzerrung ist in dem Buch "Analyse und Entwurf digitaler Mobilfunksysteme" von P.Jung, B.G. Teubner Verlag, Stuttgart 1997, auf den Seiten 188 bis 215 sowie 315 bis 318 ausführlich beschrieben. Dieses Verfahren wird als blockweise JD-Entzerrung bezeichnet, da die von sämtlichen Teilnehmern innerhalb eines Datenblocks gesendeten Daten durch Lösung eines die Übertragung des gesamten Datenblocks beschreibenden linearen Gleichungssystems im Empfänger rekonstruiert werden. Die Lösung des linearen Gleichungssystems erfolgt dabei durch sogenannte Cholesky-Zerlegung der das Gleichungssystem repräsentierenden Matrix.

In dem Buch "Nachrichtenübertragung" von K.D.Kammeyer, B.G. Teubner Verlag, Stuttgart, 1996, 2. Auflage, sind auf den Seiten 658 bis 684 verschiedene RAKE-Empfänger beschrieben. Dort ist erwähnt, dass in dem RAKE-Empfänger eine gewichtete Pfadsummation günstig ist, sofern sich die Gesamt-Empfangsenergie ungleichmäßig über die detektierten Pfade (das heisst die Finger des RAKE-Empfängers) verteilt. Dadurch kann zwar das Rauschen, nicht jedoch die Leistungsaufnahme des RAKE-Empfängers verringert werden.

Dimitris Koulakiotis, A. Hamid Aghvami, King's College, University of London, "Data Detection Techniques for DS7CDMA Mobile Systems: A Review", IEEE Personal Communications, June 2000, beschreiben DS/CDMA Systeme, bei denen ein Empfangssignal mit Hilfe einer Matched-Filterbank, die mit einer Rake-Struktur verbunden ist, prozessiert wird.

AU 56498 00 A beschreibt ein Empfangs-Terminal für ein CDMA-System.

Der Erfindung liegt die Aufgabe zugrunde, ein Verfahren anzugeben, welches dazu beiträgt, den Signalverarbeitungsaufwand bei einer Mehrteilnehmer-Detektion zu vermindern. Darüber hinaus zielt die Erfindung darauf ab, einen für die Mehrteilnehmer-Detektion geeigneten Empfänger mit reduziertem Signalverarbeitungsaufwand zu schaffen.

Die Aufgabenstellung wird durch die Merkmale der unabhängigen Ansprüche gelöst.

Durch das Deaktivieren von einem oder mehreren RAKE-Fingern der zur Mehrteilnehmer-Detektion eingesetzten RAKE-Empfänger-Struktur kann der Signalverarbeitungsaufwand für die Entzerrung erheblich reduziert werden, da nur die energierelevanten Bereiche der Kanalimpulsantwort, die für die Gewährleistung einer geforderten Dienstqualität (Quality of Service: QoS) notwendig sind, in den JD-Algorithmus einfließen.

Wie im folgenden noch näher erläutert, basiert die Mehrteilnehmer-Detektion auf dem Lösen eines linearen Gleichungssystems, welches durch eine JD-Systemmatrix gegeben ist. Erfindungsgemäß wird die JD-Systemmatrix auf die Struktur eines RAKE-Empfängers abgebildet werden, so dass jeder RAKE-Finger einem definierten Abschnitt der Matrix zugeordnet ist. Durch Deaktivieren eines RAKE-Fingers wird dieser Abschnitt der Systemmatrix nicht mehr berücksichtigt, das heisst die Systemmatrix (und damit das zu lösende lineare Gleichungssystem der JD-Entzerrung) wird in seiner Dimension reduziert. Dies bewirkt die Verminderung des Leistungsverbrauchs durch Deaktivieren eines RAKE-Fingers.

Ein vorteilhaftes Ausführungsbeispiel des erfindungsgemäßen Verfahrens kennzeichnet sich durch die Schritte des Messens der Energien der den RAKE-Fingern zugeordneten Signalen und des Bestimmens des oder der zu deaktivierenden RAKE-Finger in Abhängigkeit von den gemessenen Energien. Das heisst, die Auswahl der Finger, die zu deaktivieren bzw. abzuschalten sind, erfolgt vorzugsweise in Abhängigkeit der Energien der in den einzelnen RAKE-Fingern verarbeiteten Signale.

Neben der Auswahl ist die Anzahl der RAKE-Finger festzulegen, die deaktiviert werden können. Die Bestimmung der Anzahl der zu deaktivierenden Finger erfolgt vorzugsweise in Abhängigkeit von einer für die Dienstqualität des detektierten Signals charakteristischen Bewertungsgröße, beispielsweise der Bit-Fehlerrate (Bit Error Rate: BER). Dabei wird ein Wert für diese Bewertungsgröße ermittelt und die Anzahl der aktiven RAKE-Finger in Abhängigkeit von dem ermittelten Wert der Bewertungsgröße bestimmt.

Vorzugsweise kommt das erfindungsgemäße Verfahren in einer Mobilstation eines Mobilfunksystems zum Einsatz, da dort besonders strenge Anforderungen an die Minimierung der Leistungsaufnahme des Empfängers gestellt sind.

Eine weitere vorteilhafte Ausgestaltung des erfindungsgemäßen Verfahrens besteht darin, dass eine Zero Forcing (ZF) JD-Entzerrung oder eine MMSE (Minimum Mean Square Error) JD-Entzerrung der erhaltenen Datensignale vorgenommen wird. Die Reduzierung des Rechenaufwands für die ZF bzw. MMSE Entzerrung wird, wie bereits erwähnt, durch das Deaktivieren eines oder mehrerer RAKE-Finger bewirkt.

Eine erfindungsgemäße RAKE-Empfänger-Struktur umfasst Mittel zum Deaktivieren eines oder mehrerer RAKE-Finger zur Verminderung des Leistungsverbrauchs während des Mehrteilnehmer-Detektionsbetriebs.

Dabei umfasst die erfindungsgemäße RAKE-Empfänger-Struktur vorzugsweise ein Mittel zum Messen der Energien der den RAKE-Fingern zugeordneten Signalen, sowie ein Mittel zum Bestimmen des oder der zu deaktiviernden RAKE-Finger in Abhängigkeit von den gemessenen Energien.

Weitere vorteilhafte Ausgestaltungen der Erfindung sind in den Unteransprüchen angegeben.

Die Erfindung wird nachfolgend anhand eines Ausführungsbeispiels unter Bezugnahme auf die Zeichnung erläutert; in dieser zeigt:

Fig.1 eine schematische Darstellung der Luftschnittstelle eines Mobilfunksystems mit einer Mobilstation und einer Basisstation;

Fig. 2 ein vereinfachtes Blockschaltbild zur Erläuterung der Struktur des Basisband-Abschnittes einer erfindungsgemäßen RAKE-Empfänger-Struktur;

Fig. 3 eine Darstellung zur Erläuterung des erfindungsgemäßen Abschaltens eines RAKE-Fingers bei einer Mehrteilnehmer-Entzerrung in einer RAKE-Empfänger-Struktur; und

Fig. 4 ein Diagramm, in welchem die aus einer Simulation ermittelte Bit-Fehlerrate (BER) gegenüber dem Signal-zu-Rausch Verhältnis (SNR) für eine unterschiedliche Anzahl von aktiven RAKE-Fingern dargestellt ist.

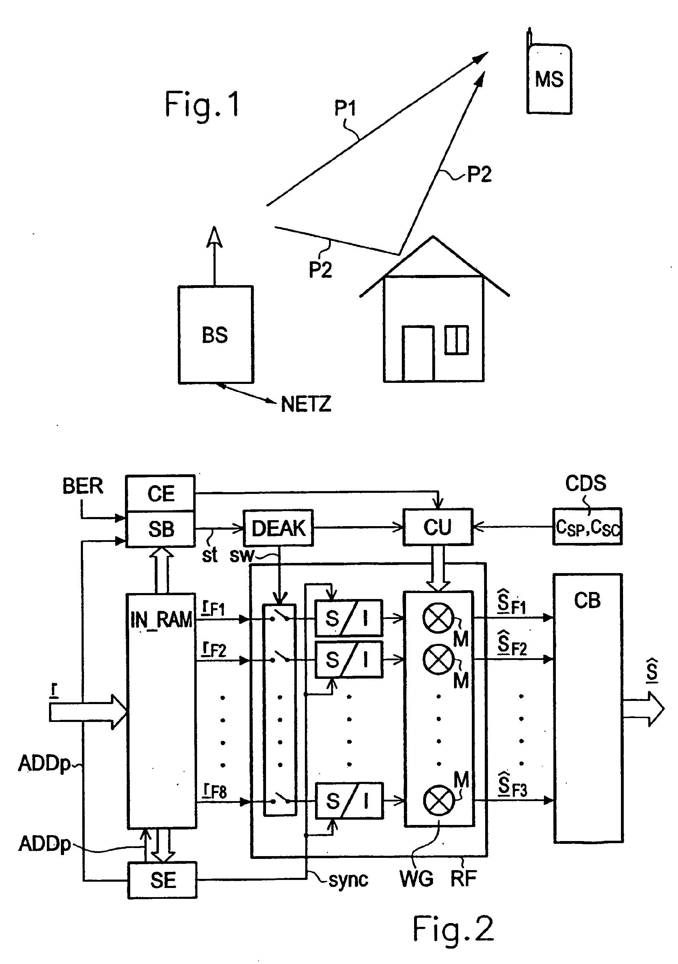

Fig. 1 zeigt in schematischer Darstellung die Luftschnittstelle eines zellularen Mobilfunksystems. Eine einem bestimmten Teilnehmer zugeordnete Mobilstation MS steht mit einer Basisstation BS in Funkverbindung. Dargestellt ist die Abwärtsstrecke, das heisst die Verbindung von der Basisstation BS (Sender) zu der Mobilstation MS (Empfänger).

Die Funkverbindung unterliegt der Mehrwegeausbreitung, das heisst ein von der Basisstation BS ausgesendetes Funksignal kann die Mobilstation MS auf unterschiedlichen Übertragungswegen oder Pfaden P1, P2 der Luftschnittstelle erreichen. Aufgrund von Reflexion, Streuung und Beugung weisen die einzelnen Pfade P1, P2 ein unterschiedliches Übertragungsverhalten auf und können als unabhängige Übertragungskanäle betrachtet werden. Insbesondere weisen diese Übertragungskanäle (Pfade der Luftschnittstelle) unterschiedliche Laufzeiten und unterschiedliche Signal-Abschwächungen auf. Ersteres hat zur Folge, dass an der Mobilstation MS zeitlich versetzte Empfangssignal-Versionen empfangen werden, letzteres bewirkt, dass diese Empfangssignal-Versionen unterschiedliche Energien aufweisen.

Es wird ein Mobilfunksystem betrachtet, welches eine CDMA-Spreizcodierung der Teilnehmersignale einsetzt. Bei der CDMA-Spreizcodierung wird jedem ausgesendeten Symbol senderseitig ein CDMA-Spreizcode aufgeprägt, der dieses Symbol unterscheidbar gegenüber den Symbolen anderer Teilnehmer (oder allgemeiner anderer "logischer" Kanäle) macht. Das Aufprägen eines CDMA-Spreizcodes auf ein auszusendendes Datensymbol kann beispielsweise durch Aufmultiplikation der den CDMA-Spreizcode repräsentierenden CDMA-Spreizcodefolge auf das Symbol durchgeführt werden. Die Elemente der CDMA-Spreizcodefolge werden als Chips bezeichnet.

Bei UMTS beträgt die Zeitdauer Tc eines Chips etwa 0,26 $\mu$s, das heisst die Chiprate 1/Tc ist etwa 3,84 MHz. Die Anzahl der Chips pro Symbol wird als Spreizfaktor Q bezeichnet. Q ist variabel, es gilt Q = Ts/Tc, wobei Ts die Symbolzeitdauer bezeichnet.

Fig. 2 zeigt einen Basisband-Abschnitt einer erfindungsgemäßen RAKE-Empfänger-Struktur. Der Basisband-Abschnitt weist einen Eingangsspeicher IN_RAM auf, dem ein Signal, bestehend aus einem Strom komplexer Daten $\underline{r}$, zugeführt wird. Der Eingangsspeicher IN_RAM führt eine Zwischenspeicherung der Daten $\underline{r}$ durch.

Eine Such- und Synchronisationseinheit SE greift auf die in dem Eingangsspeicher IN_RAM abgelegten Daten $\underline{r}$ zu und führt anhand einer Auswertung darin enthaltener und zuvor aus dem Datensignal separierter Pilotsymbole (das heisst dem Empfänger bekannter Symbole) eine Erkennung der Datenstruktur unterschiedlicher, über.verschiedene Pfade P1, P2 erhaltener Signalversionen und der zeitlichen Lagen der Signalversionen durch.

Von der Such- und Synchronisationseinheit SE ermittelte Pfadinformation ADD$_p$ betreffend das Auftreten und die Anzahl unterschiedlicher Signalversionen wird dem Eingangsspeicher IN_RAM zugeleitet, und Synchronisationsinformation sync wird einem RAKE-Finger-Abschnitt RF des RAKE-Empfängers zugeführt.

Ferner greift eine Steuer- und Bewertungseinheit SB auf den Eingangsspeicher IN_RAM zu. Der Steuer- und Bewertungseinheit SB wird auch die Pfadinformation ADD$_p$ zugeleitet. Die Steuer- und Bewertungseinheit SB gibt ein Steuersignal st aus, welches einer Deaktivierungseinrichtung DEAK zugeführt wird. Die Deaktivierungseinrichtung DEAK erzeugt daraufhin ein Schaltsignal sw, welches dem RAKE-Finger-Abschnitt RF zugeleitet ist. Ferner teilt die Deaktivierungseinrichtung DEAK eine dem Schaltsignal sw entsprechende Information einer Berechnungseinheit CU mit.

Die Berechnungseinheit CU dient der Berechnung von Entzerrer-Koeffizienten. Zu diesem Zweck steht sie ferner mit einem Kanalschätzer CE in Verbindung, welcher der Berechnungseinheit CU fortlaufend aktualisierte Kanalinformation z.B. in Form von Kanal-Koeffizienten (das heisst der diskretisierten Kanalimpulsantwort) liefert.

In einem Codespeicher CDS sind die in dem Mobilfunksystem verfügbaren Spreizcodes ("spreading codes") $C_{SP}$ und Verwürfelungscodes ("scrambling codes") $C_{SC}$ abgelegt. Die Codeelemente dieser Codes sind Chips. Die genannten Codes sind für die Berechnungseinheit CU zur Berechnung der Entzerrer-Koeffizienten verfügbar.

Der RAKE-Finger-Abschnitt RF umfasst eingangsseitig ein Schaltmittel SM, mittels welchem in Abhängigkeit von dem Schaltsignal sw im Signalweg hinter dem Schaltmittel SM angeordnete RAKE-Finger selektiv aktiviert bzw. deaktiviert werden können. Das Schaltmittel SM ist in Fig. 2 in mehr oder weniger symbolischer Weise in Form einer Reihe aus Schaltern dargestellt, das Aktivieren bzw. Deaktivieren einzelner RAKE-Finger kann jedoch hardwaretechnisch auch durch andere Maßnahmen erreicht werden.

In den Signalwegen hinter dem Schaltmittel sind Synchronisationseinheiten angeordnet. Die Synchronisationseinheiten dienen der Synchronisierung der einzelnen RAKE-Finger und sind zu diesem Zweck beispielsweise aus einem Zwischenspeicher S und einem Interpolator I aufgebaut.

Im Signalweg hinter den Synchronisationseinheiten ist eine Gewichtungseinheit WG vorgesehen. Die Gewichtungseinheit WG umfasst ein Array aus Multiplizierern M, mittels welchem die einzelnen RAKE-Finger-Signale durch Aufmultiplikation von Entzerrer-Koeffizienten einer Mehrteilnehmer-Entzerrung unterworfen werden.

Die Gewichtungseinheit WG gibt RAKE-Finger-individuell JDentzerrte Ausgangssignale $\hat{\underline{s}}_{F1}, \hat{\underline{s}}_{F2}, ..., \hat{\underline{s}}_{F8}$ aus. Diese werden in üblicher Weise von einem Combiner CB (beispielweise Maximum Ratio Combiner: MRC) kombiniert und zu einem Ausgangssignal $\hat{\underline{s}}$ zusammengeführt. Das Ausgangssignal $\hat{\underline{s}}$ besteht aus den im Empfänger geschätzten Rekonstruktionen der gesendeten Symbole.

Im folgenden wird die Arbeitsweise des in Fig. 2 dargestellten Basisband-Abschnitts einer erfindungsgemäßen RAKE-Empfänger-Struktur näher erläutert.

Die eingangsseitige, hier nicht dargestellte Erzeugung der Basisband- oder Zwischenfrequenz-Daten $\underline{r}$ kann auf üblichem Wege erfolgen, z.B. mittels einer (nicht dargestellten) Heterodyn-Stufe. Diese umfasst z.B. eine Hochfrequenz-Mischstufe, welche aus einem über eine Antenne empfangenen Signal analoge Inphase(I)- und Quadratur(Q)-Signalkomponenten erzeugt und diese durch Frequenzmischung auf eine geeignete Zwischenfrequenz oder in das Basisband heruntermischt. Die heruntergemischten analogen I- und Q-Signalkomponenten werden von Analog-Digital-Umsetzern digitalisiert. Die Digitalisierung erfolgt z.B. mit einer Abtastrate von $2/T_c$, d.h. beispielsweise etwa 8 MHz, wobei die einzelnen Chips der für den CDMA-Vielfachzugriff verwendeten Spreizcodes aufgelöst werden.

Die digitalisierten I- und Q- Signalkomponenten werden dann in ebenfalls bekannter Weise mittels eines digitalen Tiefpassfilters geglättet und gegebenenfalls durch eine Frequenzkorrektureinheit frequenzkorrigiert.

Die Aufteilung der auf diese Weise erzeugten Abtastwerte (Daten $\underline{r}$) auf die Signalkomponenten $\underline{r}_{F1}, \underline{r}_{F2}, ..., \underline{r}_{F8}$ für die einzelnen RAKE-Finger erfolgt unter Steuerung der Such- und Synchronisationseinheit SE mittels der Pfadinformation ADD$_P$.

Zum besseren Verständnis der Erfindung wird an dieser Stelle das Prinzip eines herkömmlichen RAKE-Empfängers beschrieben.

Dieses besteht darin, dass jeder RAKE-Finger genau einem Pfad ("Subkanal") der Luftschnittstelle zugeordnet ist. Das heisst, es werden mittels der Pfadinformation ADD$_P$ aus dem Eingangsspeicher IN_RAM Abtastwerte pfadbezogen ausgelesen und die entsprechenden Daten $\underline{r}_{F1}, \underline{r}_{F2}, ..., \underline{s}_{F8}$ den einzelnen RAKE-Fingern zugeleitet.

Nachfolgend erfolgt eine pfadindividuelle Synchronisation der RAKE-Finger. Zu diesem Zweck umfasst die von der Such- und Synchronisationseinheit SE ausgegebene Synchronisationsinformation sync Grob- und Feinsynchronisationssignale für jeden RAKE-Finger. Die Grobsynchronisationssignale stellen individuelle zeitgesteuerte Ausleseanweisungen für die Zwischenspeicher S dar und bewirken eine Grobsynchronisation der einzelnen RAKE-Finger z.B. bis zu einer Genauigkeit von Tc. Die Feinsynchronisation erfolgt jeweils mittels der Interpolatoren I durch Interpolation der Abtastwerte in den jeweiligen RAKE-Fingern in Abhängigkeit von individuellen Interpolationsanweisungen. Die Interpolationsanweisungen (Feinsynchronisationssignale) werden in der Such- und Synchronisationseinheit SE beispielsweise durch einen Früh-Spät-Korrelator ermittelt.

Durch die Interpolation der Abtastwerte wird eine Verminderung der Abtastrate in jedem RAKE-Finger auf 1/Tc vorgenommen, d.h. jeder Chip wird durch einen Signalwert repräsentiert. Die Signale hinter den Interpolatoren I sind mit einer Genauigkeit von mindestens Tc/2 synchron.

Bei der erfindungsgemäßen JD-RAKE-Struktur sind die RAKE-Finger hingegen nicht bestimmten Pfaden der Luftschnittstelle zugeordnet. Statt einer pfadindividuellen Synchronisierung wird zwischen jedem Finger ein fester relativer Zeitversatz von jeweils einer Symbolzeitdauer, d.h. Q Chips, eingestellt. Dies kann mittels der Speicher S erfolgen (in diesem Fall erhalten die RAKE-Finger dieselben Daten $\underline{r}_{F1}$, $\underline{r}_{F2}$, ..., $\underline{r}_{F8}$) oder die Zeitversätze können durch einen entsprechend zeitversetzten Datenabruf aus dem Eingangsspeicher IN_RAM bewerkstelligt werden. Nur der erste ("früheste") Finger muss pfadbezogen synchronisiert werden, die Synchronisation der anderen Finger orientiert sich dann an diesem Finger.

Im folgenden wird die erfindungsgemäße Signalverarbeitung in den RAKE-Fingern betrachtet.

Wie viele RAKE-Finger des RAKE-Finger-Abschnitts RF zur Entzerrung des erhaltenen Signals aktiv sind, wird durch die Steuer- und Bewertungseinheit SB bestimmt. In der Steuer- und Bewertungseinheit SB werden die Energien der den einzelnen Fingern zugeordneten symbolweise zeitversetzten Signalsequenzen geschätzt. Das heisst, es werden jeweils die Energie von Chip-Teilsequenzen der Länge Q des Kanals, beginnend mit dem ersten Tap des Kanals, geschätzt. Die Energieschätzung erfolgt mit Hilfe der von dem Kanalschätzer CE geschätzten Kanalimpulsantworten.

Ferner wird der Steuer- und Bewertungseinheit SB Information über die erreichte Dienstqualität, beispielsweise Information zur Ermittlung des BER oder ein von einer anderen Funktioneinheit bereits ermittelter Wert für das BER mitgeteilt. Für die Ermittlung von Information über die erreichte Dienstqualität stehen verschiedene bekannte Verfahren zur Verfügung, z.B. kann sie bei der Kanaldecodierung, gegebenenfalls im Rahmen einer blockweisen Turbo-Decodierung, erhalten werden.

Die Auswahl der RAKE-Finger erfolgt anhand der ermittelten Energien der Signalsequenzen. Es werden die Signalsequenzen mit den höchsten Energien für die Entzerrung verwendet.

Die Anzahl der RAKE-Finger, die für eine ausreichende Detektionsqualität zugeschaltet werden müssen, ergibt sich aus der ermittelten Dienstqualität, ausgedrückt z.B. durch das BER. Liegt das ermittelte BER über einem geforderten Sollwert, müssen weitere RAKE-Finger zugeschaltet werden, um die Dienstqualität zu verbessern. Im umgekehrten Fall, das heisst sofern das geschätzte BER unter dem Sollwert des geforderten BER liegt, können ein oder mehrere RAKE-Finger abgeschaltet werden.

Die Abschaltung wird in dem hier dargestellten Beispiel über die Deaktivierungseinrichtung DEAK und das Schaltmittel vorgenommen. Gleichzeitig wird der Berechnungseinheit CU mitgeteilt, dass für die abgeschalteten RAKE-Finger eine Berechnung von Entzerrer-Koeffizienten nicht mehr erforderlich ist. Infolgedessen können auch die entsprechenden Multiplizierer der Gewichtungseinheit WG deaktiviert werden.

Das beschriebene Verfahren (Bestimmung der Auswahl und der Anzahl der aktiven RAKE-Finger) wird in einer Abarbeitungsschleife ständig wiederholt ausgeführt, so dass stets aktualisierte Angaben (Gesamtanzahl, Fingernummern) über die benötigten aktiven RAKE-Finger vorliegen. Dadurch wird der im Mobilfunk auftretenden Zeitvarianz der Empfangsbedingungen Rechnung getragen.

Aus der vorstehenden Beschreibung geht hervor, dass ein wechselnde Anzahl von RAKE-Fingern im RAKE-Finger-Abschnitt RF aktiv bzw. deaktiv sind. Um diesbezüglich einen unnötig hohen Hardware-Aufwand zu vermeiden, sowie auch aus anderen Gründen, kann in nicht dargestellter Weise eine Multiplexierung der RAKE-Finger im RAKE-Finger-Abschnitt RF vorgesehen sein. Beispielsweise können (wie dargestellt) acht tatsächliche RAKE-Finger und eine vierfache Multiplexierung dieser Hardwarestruktur eine Gesamtzahl von 32 RAKE-Fingern (davon 24 virtuelle RAKE-Finger) ermöglichen.

Ein weiterer Gesichtspunkt besteht darin, dass z.B. bei UMTS, aber auch in anderen CDMA-Systemstandards, variable Spreizfaktoren eingesetzt werden können. Da die Multiplizierer M der Gewichtungseinheit WG bei der Mehrteilnehmer-Entzerrung eine chipweise Multiplikation durchführen (das heisst jeder Chip eines RAKE-Finger-Signals wird mit einem von der Berechnungseinheit CU ermittelten Entzerrer-Koeffizienten multipliziert), und jede Multiplikation komplexwertig auszuführen ist (eine komplexwertige Multiplikation entspricht vier reellen Multiplikationen), kann darüber hinaus innerhalb des RAKE-Finger-Abschnitts RF eine Multiplexierung der einzelnen Multiplizierer M innerhalb der Gewichtungseinheit WG günstig sein. In diesem Fall ist im Signalweg hinter den Multiplizierern M in nicht dargestellter Weise eine Demultiplexer-Schaltung angeordnet. Beispielsweise können 16 Hardware-Multiplizierer M vorgesehen sein, wobei jeder Multiplizierer M Signale von maximal zwei (der 32 gemultiplexten) RAKE-Fingern verarbeiten kann.

Die Verwendung eines RAKE-Empfängers zur Durchführung einer JD-Entzerrung beruht wie bereits erwähnt darauf, dass die Systemmatrix eines JD-Übertragungssystems auf die Systemmatrix eines Q-fach überabgetasteten RAKE-Empfängers abgebildet werden kann. Dies wird im folgenden erläutert:

Ein Übertragungskanal bezüglich des k-ten Teilnehmers wird im Chiptakt-Kanalmodell, dargestellt im Matrix-Vektor-Formalismus, durch eine Matrix $\underline{A}_G^{(k)}$ der Dimension $W_s \cdot Q \times (L_s + W_s - 1)$ beschrieben, welche sowohl die senderseitige Signalbearbeitung durch Aufmultiplizieren von Spreizcodes und Verwürfelungscodes auf die auszusendenden Datensymbole $\underline{s}$ als auch die bei der Übertragung über die Luftschnittstelle erlittenen Signalverzerrungen beschreibt. Mit $L_s$ wird die Kanallänge in Symbolen, d.h. das Kanalgedächtnis im Symboltakt-Kanalmodell, und mit $W_s$ die (wählbare) Anzahl der für die Entzerrung berücksichtigten Symbole bezeichnet. Ein hochgestelltes T bezeichnet den transponierten Vektor bzw. die transponierte Matrix, Unterstreichungen deuten an, dass eine Größe komplexwertig ist.

Eine Sequenz bestehend aus $L_s + W_s - 1$ auszusendenden Datensymbolen $\left\{\underline{s}_{n-L_s+1}^k, \ldots, \underline{s}_n^k, \ldots, \underline{s}_{n+W_s-1}^k\right\}$ des k-ten Teilnehmers wird im Vektor-Matrix-Formalismus durch den (Spalten-)Vektor $\underline{s}_n^{(k)} = (\underline{s}_{n-L_s+1}^k \cdots \underline{s}_{n+W_s-1}^k)^T$ der Dimension $(L_s + W_s - 1) \times 1$ zum n-ten Zeitschritt beschrieben.

Bezüglich aller K Teilnehmer wird mit

$$\underline{s}_n = (\underline{s}_n^{(1)T} \cdots \underline{s}_n^{(k)T} \cdots \underline{s}_n^{(K)T})^T \qquad (1)$$

der sogenannte "kombinierte" Vektor sämtlicher gesendeter Datensymbole, bezogen auf den n-ten Zeitschritt, gebildet. Seine Dimension ist $K \cdot (L_s + W_s - 1) \times 1$.

Die gesendeten Datensymbole werden spreizcodiert, über jeweils mehrere Pfade zum Empfänger übertragen und dort mittels JD entzerrt.

Die Gleichung für die Rekonstruktion $\underline{\hat{s}}_n^k$ des vom k-ten Teilnehmer zum Zeitschritt n ausgesendeten Datensymbols im Empfänger lautet:

$$\underline{\hat{s}}_n^k = \underline{m}^{(k)} \underline{r}_n$$

$$\text{mit } \underline{r}_n = \underline{A}_G \underline{s}_n \qquad (2)$$

Dabei wird das gesamte Mehrteilnehmer-System bestehend aus K Teilnehmern (einschließlich Spreizcodierungen und bei der Signalübertragung auftretender Signalverzerrungen) durch die sogenannte Mehrteilnehmer-Systemmatrix $\underline{A}_G$ der Dimension $W_s \cdot Q \times K(L_s + W_s - 1)$ beschrieben.

Der Vektor $\underline{r}_n$ repräsentiert die auf alle Teilnehmer zurückgehenden empfangenen Daten im Chiptakt. Die empfängerseitige JD-Entzerrung der empfangenen Daten bezüglich des k-ten Teilnehmers wird in diesem Modell durch einen Entzerrer-Vektor $\underline{m}^{(k)}$ der Dimension $1 \times W_s \cdot Q$ realisiert, der auf der Basis der geschätzten Kanalkoeffizienten von der Berechnungseinheit CU berechnet wird. Die $W_s \cdot Q$ Elemente des Entzerrer-Vektors $\underline{m}^{(k)}$ sind die Entzerrer-Koeffizienten für den k-ten Teilnehmer.

Die Berechnungsvorschrift für den Entzerrer-Vekor $\underline{m}^{(k)}$ ist abhängig von dem gewählten Entzerrer-Algorithmus. Für den Fall einer ZF-Entzerrung wird sie später noch angegeben.

Die Mehrteilnehmer-Systemmatrix $\underline{A}_G$ ergibt sich in folgender Weise aus Systemmatrizen $\underline{A}_G^{(k)}$ der Dimension $W_s \cdot Q \times (L_s + W_s - 1)$ bezüglich der einzelnen Teilnehmer:

$$\underline{A}_G = \left[ \underline{A}_G^{(1)} \underline{A}_G^{(2)} \cdot \cdot \underline{A}_G^{(K)} \right] \qquad (3)$$

Die Teilnehmer-Systemmatrizen $\underline{A}_G^{(k)}$ sind definiert durch:

$$\underline{A}_G^{(k)} = \begin{bmatrix} \left[ \underline{A}^{\prime(k)} \right] 0 \ldots \ldots 0 \\ 0 \left[ \underline{A}^{\prime(k)} \right] 0 \ldots 0 \\ 0\, 0 \left[ \underline{A}^{\prime(k)} \right] 0 \ldots 0 \\ \ddots \\ 0 \ldots \ldots 0 \left[ \underline{A}^{\prime(k)} \right] \end{bmatrix} \qquad (4)$$

wobei $\underline{A}^{\prime(k)}$ im allgemeinen Fall eine Matrix der Dimension $Q \times L_s$ ist, die hier zur besseren Darstellbarkeit für den Sonderfall $L_s = 2$ (d.h. der Dimension $Q \times 2$) angegeben ist.

$$\underline{A}^{\prime(k)} = \begin{bmatrix} \underline{a}_{Q+1}^{(k)} & \underline{a}_1^{(k)} \\ \underline{a}_{Q+2}^{(k)} & \underline{a}_2^{(k)} \\ \vdots & \vdots \\ \underline{a}_{Q+L-1}^{(k)} & \underline{a}_{L-1}^{(k)} \\ 0 & \underline{a}_L^{(k)} \\ \vdots & \vdots \\ 0 & \underline{a}_Q^{(k)} \end{bmatrix} \qquad (5)$$

Die Elemente der Matrizen $\underline{A}^{\prime(k)}$ ergeben sich aus den jeweiligen Spreizcodes der Teilnehmer und den Kanal-eigenschaften:

$$\underline{a}^{(k)} = \underline{C}^{\prime(k)} \underline{h}^{(k)T} \qquad (6)$$

Dabei ist $\underline{a}^{(k)} = \left( \underline{a}_1^{(k)} \cdot \cdot \underline{a}_{Q+L-1}^{(k)} \right)^T$ ein Vektor der Dimension $(Q+L-1) \times 1$ und $\underline{C}^{\prime(k)}$ ist eine durch den Spreizcode $C_{SP}$ des betrachteten k-ten Teilnehmers, hier mit $\underline{c}^{(k)} = \left( \underline{c}_1^k \cdot \cdot \underline{c}_Q^k \right)$ bezeichnet, gegebene Matrix

$$\underline{C}^{'(k)} = \begin{bmatrix} \underline{c}_1^k & 0 & \cdots & 0 \\ \underline{c}_2^k & \underline{c}_1^k & & \vdots \\ \vdots & \underline{c}_2^k & & \\ \underline{c}_Q^k & & & \vdots \\ 0 & \underline{c}_Q^k & & 0 \\ \vdots & & \ddots & \underline{c}_1^k \\ & & \ddots & \underline{c}_2^k \\ \vdots & & & \vdots \\ 0 & \cdots & 0 & \underline{c}_Q^k \end{bmatrix} \qquad (7)$$

der Dimension $(Q+L-1)\times L$. Dabei wird mit L die Kanallänge in Chips im Chiptakt-Kanalmodell bezeichnet.

$\underline{h}^{(k)} = \left(\underline{h}_1^k \ldots \underline{h}_L^k\right)^T$ ist der (Spalten-) Vektor, der aus den L Kanalimpulsantworten $\underline{h}_1^k$, $\underline{h}_2^k$, $\ldots$, $\underline{h}_L^k$ bezüglich des k-ten Teilnehmers gebildet ist.

Es wird zur einfacheren mathematischen Darstellung angenommen, daß kein Verwürfelungscode eingesetzt wird.

Eine analoge Beschreibung eines Übertragungssystems (jedoch bezogen auf eine blockweise Datenübertragung) ist im Stand der Technik bekannt und ausführlich in den Buch "Analyse und Entwurf digitaler Mobilfunksysteme" von P. Jung, B.G. Teubner Verlag Stuttgart, 1997, auf den Seiten 188-215 beschrieben.

Es wird deutlich, dass der zur Berechnung eines gesendeten Datensymbols des k-ten Teilnehmers benötigte "Entzerrer" $\underline{m}^{(k)}$ aus Q "Sub-Entzerrern" jeweils der Länge $W_s$ besteht. D.h., dass zur JD-Entzerrung ein mit Q-facher Überabtastung betriebener RAKE-Empfänger benötigt wird. Ferner wird aus der vorstehenden Analyse deutlich, dass die Entspreizung ein integraler Bestandteil der Entzerrung wird.

Bei einer ZF Mehrteilnehmer-Entzerrung werden die Entzerrer-Koeffizienten (d.h. die Elemente des Entzerrervektors $\underline{m}^{(k)}$) durch Lösen des Gleichungssystems

$$\underline{m}^{(k)}\underline{A}_G = \varsigma_j \qquad (8)$$

berechnet. Dabei ist $\varsigma_j$ ein $1\times K\cdot(L_s+W_s-1)$ (Zeilen-) Vektor, der die ZF-Bedingung bezüglich eines bestimmten (k-ten) Teilnehmers vorgibt. Der ZF-Vektor $\varsigma_j$ läßt sich folgendermaßen darstellen

$$\varsigma_j = \left(0\ldots0\ 1\ 0\ldots0\right) \qquad (9)$$

wobei die 1 an der j-ten Position,
$j = (k-1)(L_s+W_s-1)+1, \ldots, k(L_s+W_s-1)$ steht.

Ein anderer Algorithmus, der zur Mehrteilnehmer-Entzerrung verwendet werden kann, ist MMSE und deren DF-(Decision Feedback-) Varianten.

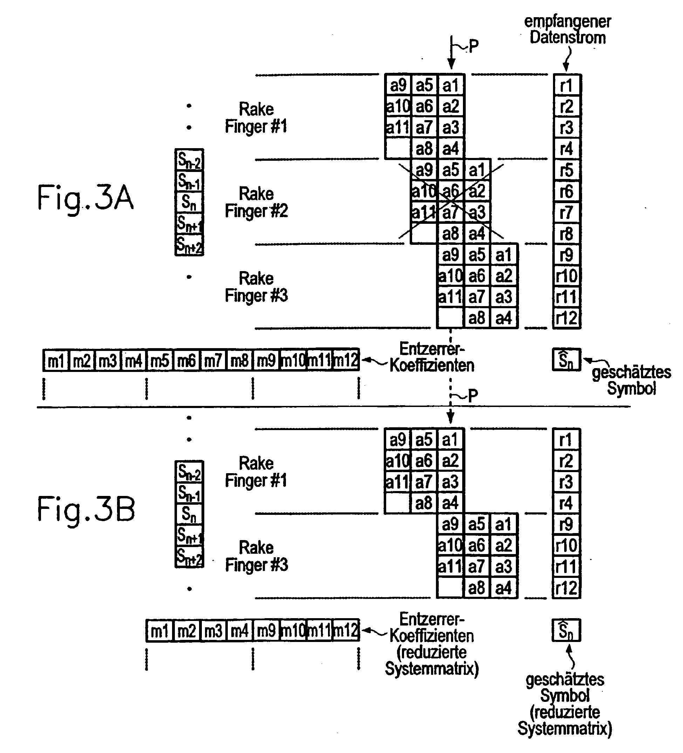

Fig. 3, oberer Teil A, veranschaulicht die Berechnung von $\hat{\underline{s}}_n^k$ eines beliebigen Teilnehmers k, im folgenden mit $\hat{\underline{s}}_n$ bezeichnet, für $Q = 4$, $W_s = 3$, $L_s = 3$ und $K = 1$ durch die RAKE-Empfänger-Struktur anhand einer Darstellung eines Ausschnitts der Systemmatrix $\underline{A}_G$, der Entzerrer-Koeffizienten m1 bis m12, der von dem Teilnehmer gesendeten Daten $\underline{s}_{n-2}$ bis $\underline{s}_{n+2}$ (in Symbolrate), der empfangenen Daten r1 bis r12 (in Chiprate) und des für den n-ten Zeitschritt geschätzten Datensymbols $\hat{\underline{s}}_n$ (Unterstreichungen werden in Fig. 3 ignoriert). Der RAKE-Finger #1 verarbeitet die erste aus Q Chips bestehende Signalsequenz, der RAKE-Finger #2 verarbeitet die zweite, um $Q \cdot T_c$ verzögerten Q Daten, usw. D.h., das Eingangssignal an jedem RAKE-Finger ist hinsichtlich der Symbolrate ein Q-fach überabgetastetes Signal. Jeder Abtastwert enthält dieselbe Information bezüglich des gesendeten Datensymbols, jedoch unterschiedliche Information bezüglich des verwendeten Spreizcodes und des Übertragungskanals.

Die aktuellen Energien der in den RAKE-Fingern verarbeiteten Signale ergeben sich als Summe der jeweiligen Matrixelemente in der durch den Pfeil P gekennzeichneten Spalte, d.h. für den RAKE-Finger #1 als Summe der Matrixelemente a1, a2, a3, a4, für den RAKE-Finger #2 als Summe der Matrixelemente a5, a6, a7, a8, und für den RAKE-Finger #3 als Summe der Matrixelemente a9, a10, a11. Ein Maß für die Interferenz in jedem RAKE-Finger wird durch die Summe der Matrixelemente in den restlichen Spalten angegeben (d.h. für den RAKE-Finger #1 als Summe der Matrixelemente a9, a10, a11, a5, a6, a7, a8; für den RAKE-Finger #2 als Summe der Matrixelemente a9, a10, a11, a1, a2, a3, a4; für den RAKE-Finger #3 als Summe der Matrixelemente a5, a6, a7, a8, a1, a2, a3, a4). Die aktuelle Energie wird wie bereits erwähnt in jedem RAKE-Finger durch eine Messung über eine Sequenz von Q Chips ermittelt. Die Energiemessung erfolgt somit in Symbolrate.

Sofern im RAKE-Finger #2 eine geringe Energie gemessen wird und andererseits eine ausreichend hohe Dienstqualität ermittelt wird, wird der RAKE-Finger #2 abgeschaltet. Dies ist in Fig. 3, oberer Teil A, durch die Streichung des entsprechenden Matrix-Abschnittes angedeutet.

Durch die Streichung des dem RAKE-Finger #2 zugeordneten Matrix-Abschnittes wird die Dimension der Systemmatrix reduziert. Fig. 3, unterer Teil B, zeigt einen dem oberen Teil A entsprechenden Ausschnitt aus der Systemmatrix nach ihrer Reduzierung. Die empfangenen Daten r5, r6, r7, r8 werden für die Entzerrung nicht mehr berücksichtigt, der Entzerrer-Vektor ist infolgedessen um die entsprechenden Vektorelemente verkürzt.

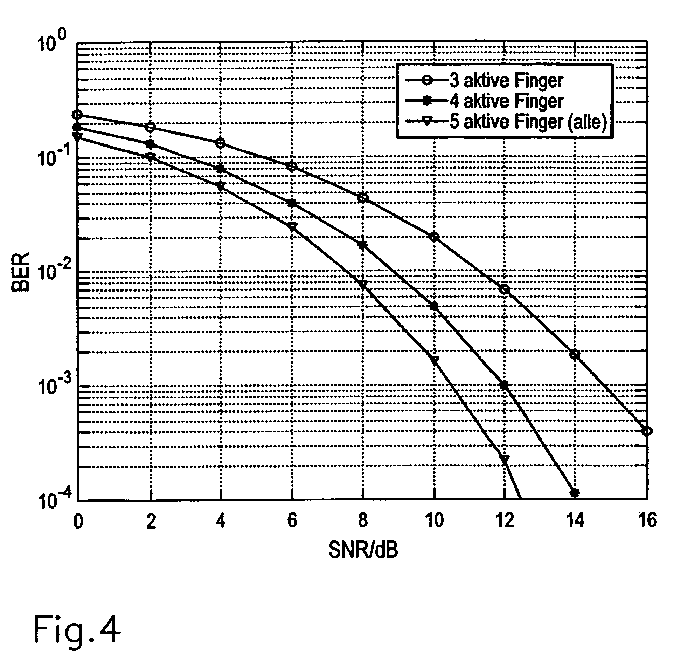

In Fig. 4 ist die Roh-Bitfehlerrate (BER) dargestellt, welche bei einer Simulation des RAKE-Empfängers in Abhängigkeit von dem Signal-zu-Rausch Verhältnis (SNR: Signal-to-Noise Ratio) erhalten wurde. Die Simulation wurde für die Kanallänge $L_s = 5$ und drei bis fünf aktive RAKE-Finger eines aus insgesamt fünf Fingern bestehenden RAKE-Empfängers durchgeführt. Der Kanal wurde basierend auf dem CODIT MIC Modell simuliert.

Fig. 4 zeigt, dass im Bereich eines Signal-zu-Rausch Verhältnisses zwischen 6 und 10 dB die Leistungseinbuße bei Aktivierung von 4 Fingern etwa 1,5 dB und bei Aktivierung von 3 Fingern etwa 4 dB beträgt. Für fehlerschutzcodierte Signale sind diese Ergebnisse akzeptabel.

Die ZF-Entzerrung sowie ein mögliches Verfahren zur Lösung der Gleichung 8 durch Cholesky-Zerlegung sind in der deutschen Patentanmeldung DE 101 06 391.1 ausführlich beschrieben.

**Patentansprüche**

1. Verfahren zur Mehrteilnehmer-Detektion mittels einer mit einem festen Zeitversatz zwischen den RAKE-Fingern realisierten RAKE-Empfänger-Struktur, wobei die Mehrteilnehmer-Systemmatrix in der Weise auf die RAKE-Empfänger-Struktur abgebildet wird, dass jeder RAKE-Finger einem definierten Abschnitt der Mehrteilnehmer-Systemmatrix zugeordnet ist, mit dem Schritt:

   - Deaktivieren von ein oder mehreren RAKE-Fingern zur Verminderung des Leistungsverbrauchs der RAKE-Empfänger-Struktur im Betrieb.

2. Verfahren nach Anspruch 1,
   **gekennzeichnet durch** die Schritte:

   - Messen der Energien der den RAKE-Fingern zugeordneten Signale;
   - Bestimmen des oder der zu deaktivierenden RAKE-Finger in Abhängigkeit von den gemessenen Energien.

3. Verfahren nach Anspruch 1 oder 2,
   **gekennzeichnet durch** die Schritte:

   - Ermitteln eines Wertes einer für die Dienstqualität des detektierten Signals charakteristischen Bewertungsgröße;
   - Bestimmen der Anzahl der aktiven RAKE-Finger in Abhängigkeit von dem ermittelten Wert der Bewertungsgröße.

4. Verfahren nach Anspruch 3,
   **dadurch gekennzeichnet,**

- **dass** es sich bei der Bewertungsgröße um die Bitfehlerrate (BER) handelt.

5. Verfahren nach einem der vorhergehenden Ansprüche,
**dadurch gekennzeichnet,**

- **dass** das Verfahren in einer Mobilstation eines Mobilfunksystems eingesetzt wird.

6. Verfahren nach einem der vorhergehenden Ansprüche,
**dadurch gekennzeichnet,**

- **dass** eine ZF Mehrteilnehmer-Entzerrung oder eine MMSE Mehrteilnehmer-Entzerrung der empfangenen Signale vorgenommen wird.

7. RAKE-Empfänger-Struktur, die ausgebildet ist, um eine Mehrteilnehmer-Detektion mittels einer mit einem festen Zeitversatz zwischen den RAKE-Fingern realisierten RAKE-Empfänger-Struktur durchzuführen, wobei die Mehrteilnehmer-Systemmatrix in der Weise auf die RAKE-Empfänger-Struktur abgebildet wird, dass jeder RAKE-Finger einem definierten Abschnitt der Mehrteilnehmer-Systemmatrix zugeordnet ist, mit

- einem Mittel (DEAK) zum Deaktivieren eines oder mehrerer RAKE-Finger des Empfängers zur Verminderung des Leistungsverbrauchs im Betrieb.

8. RAKE-Empfänger-Struktur nach Anspruch 7, **gekennzeichnet durch**

- ein Mittel (CE, SB) zum Messen der Energien der den RAKE-Fingern zugeordneten Signale,
- ein Mittel (SB) zum Bestimmen des oder der zu deaktivierenden RAKE-Finger in Abhängigkeit von den gemessenen Energien.

9. RAKE-Empfänger-Struktur nach Anspruch 7 oder 8, **gekennzeichnet durch**

- ein Mittel zum Ermitteln einer für die Dienstqualität des detektierten Signals charakteristischen Bewertungsgröße, und
- ein Mittel (SB) zum Bestimmen des oder der zu deaktivierenden Finger in Abhängigkeit von der ermittelten Bewertungsgröße.

10. RAKE-Empfänger-Struktur nach einem der Ansprüche 7 bis 9, **gekennzeichnet durch**

- ein Mittel (CU) zum Berechnen von Mehrteilnehmer-Entzerrer-Koeffizienten für eine ZF-Entzerrung oder eine MMSE-Entzerrung von empfangenen Signalen.

**Claims**

1. Method for multi-subscriber detection by means of a RAKE receiver structure which is formed by a fixed time offset between the RAKE fingers, with the multi-subscriber system matrix being mapped onto the RAKE receiver structure in such a way that each RAKE finger is allocated to a defined section of the multi-subscriber system matrix, having the following step:

- deactivation of one or more RAKE fingers in order to reduce the power consumption of the RAKE receiver structure during operation.

2. Method according to Claim 1,
**characterized by** the following steps:

- measurement of the energy levels of the signals which are associated with the RAKE fingers;
- determination of the RAKE finger or fingers to be deactivated as a function of the measured energy levels.

3. Method according to Claim 1 or 2,
**characterized by** the following steps:

- determination of a value of an assessment variable which is characteristic of the quality of service of the detected signal;
- determination of the number of active RAKE fingers as a function of the determined value of the assessment variable.

4. Method according to Claim 3,
**characterized**

- **in that** the assessment variable is the bit error rate (BER).

5. Method according to one of the preceding claims,
**Characterized**

- **in that** the method is used in a mobile station in a mobile radio system.

6. Method according to one of the preceding claims,
**characterized**

- **in that** ZF multi-subscriber equalization or MMSE multi-subscriber equalization is carried out on the received signals.

7. RAKE receiver structure, which is designed to carry out multi-subscriber detection by means of a RAKE receiver structure which is formed by a fixed time offset between the RAKE fingers, with the multi-subscriber system matrix being mapped onto the RAKE receiver structure in such a way that each RAKE finger is allocated to a defined section of the multi-subscriber system matrix, having

- a means (DEAC) for deactivation of one or more RAKE fingers of the receiver in order to reduce the power consumption during operation.

8. RAKE receiver structure according to Claim 7,
**characterized by**

- a means (CE, SB) for measurement of the energy levels of the signals which are associated with the RAKE fingers,
- a means (SB) for determination of the RAKE finger or fingers to be deactivated, as a function of the measured energy levels.

9. RAKE receiver structure according to Claim 7 or 8,
**characterized by**

- a means for determination of an assessment variable which is characteristic of the quality of service of the detected signal, and
- a means (SB) for determination of the finger or fingers to be deactivated, as a function of the determined assessment variable.

10. RAKE receiver structure according to one of Claims 7 to 9,
**characterized by**

- a means (CU) for calculation of multi-subscriber equalizer coefficients for ZF equalization or MMSE equalization of received signals.

**Revendications**

1. Procédé de détection multi-abonné au moyen d'une structure de récepteur RAKE réalisée avec un décalage fixe dans le temps entre les doigts RAKE, la matrice du système multi-abonné étant reproduite sur la structure de récepteur RAKE, de façon à associer à chaque doigt RAKE une partie définie de la matrice de système multi-abonné, comprenant le stade dans lequel :

- on désactive un ou plusieurs doigts RAKE pour diminuer la consommation de puissance de la structure de récepteur RAKE en fonctionnement.

2. Procédé suivant la revendication 1,
   **caractérisé par** les stades dans lesquels :

   - on mesure les énergies des signaux associés aux doigts RAKE ;
   - on détermine le ou les doigts RAKE à désactiver en fonction des énergies mesurées.

3. Procédé suivant la revendication 1 ou 2,
   **caractérisé par** les stades dans lesquels :

   - on détermine une valeur d'une grandeur d'évaluation caractéristique de la qualité de service du signal détecté ;
   - on détermine le nombre des doigts RAKE actifs en fonction de la valeur déterminée de la grandeur d'évaluation.

4. Procédé suivant la revendication 3,
   **caractérisé**

   - **en ce que** la valeur d'évaluation est le taux d'erreur sur les bits (BER).

5. Procédé suivant l'une des revendications précédentes,
   **caractérisé**

   - **en ce que** l'on utilise le procédé dans une station mobile d'un système de téléphonie mobile.

6. Procédé suivant l'une des revendications précédentes,
   **caractérisé**

   - **en ce que** l'on effectue une égalisation multi-abonné ZF ou une égalisation multi-abonné MMSE des signaux reçus.

7. Structure de récepteur RAKE qui est constituée pour effectuer une détection multi-abonné au moyen d'une structure de récepteur RAKE réalisée en ayant un décalage fixe dans le temps entre les doigts RAKE, la matrice de système multi-abonné étant reproduite sur la structure de récepteur RAKE de façon à associer à chaque noyau RAKE une partie définie de la matrice de système multi-abonné, comprenant

   - un moyen (DEAK) pour désactiver un ou plusieurs doigts RAKE du récepteur, afin de diminuer la consommation de puissance en fonctionnement.

8. Structure de récepteur RAKE suivant la revendication 7,
   **caractérisée par**

   - un moyen (CE, SB) de mesure des énergies des signaux associés aux doigts RAKE,
   - un moyen (SB) de détermination du ou des doigts RAKE à désactiver en fonction des énergies mesurées.

9. Structure de récepteur RAKE suivant la revendication 7 ou 8,
   **caractérisée par**

   - un moyen de détermination d'une grandeur d'évaluation caractéristique de la qualité de service du signal détecté, et
   - un moyen (SB) de détermination du ou des doigts à désactiver en fonction de la grandeur d'évaluation déterminée.

10. Structure de récepteur RAKE suivant l'une des revendications 7 à 9,
    **caractérisée par**

    - un moyen (CU) de calcul de coefficient d'égalisation multi-abonné pour une égalisation ZF ou pour une égalisation MMSE de signaux reçus.

Fig.1

Fig.2

**Fig.3A**

empfangener
Datenstrom

~P

Rake
Finger #1

Rake
Finger #2

Rake
Finger #3

$S_{n-2}$
$S_{n-1}$
$S_n$
$S_{n+1}$
$S_{n+2}$

| a9 | a5 | a1 |
| a10 | a6 | a2 |
| a11 | a7 | a3 |
| | a8 | a4 |

| a9 | a5 | a1 |
| a10 | a6 | a2 |
| a11 | a7 | a3 |
| | a8 | a4 |

| a9 | a5 | a1 |
| a10 | a6 | a2 |
| a11 | a7 | a3 |
| | a8 | a4 |

| r1 |
| r2 |
| r3 |
| r4 |
| r5 |
| r6 |
| r7 |
| r8 |
| r9 |
| r10 |
| r11 |
| r12 |

| m1 | m2 | m3 | m4 | m5 | m6 | m7 | m8 | m9 | m10 | m11 | m12 |

Entzerrer-
Koeffizienten

~P

$\hat{S}_n$

geschätztes
Symbol

**Fig.3B**

Rake
Finger #1

Rake
Finger #3

$S_{n-2}$
$S_{n-1}$
$S_n$
$S_{n+1}$
$S_{n+2}$

| a9 | a5 | a1 |
| a10 | a6 | a2 |
| a11 | a7 | a3 |
| | a8 | a4 |

| a9 | a5 | a1 |
| a10 | a6 | a2 |
| a11 | a7 | a3 |
| | a8 | a4 |

| r1 |
| r2 |
| r3 |
| r4 |
| r9 |
| r10 |
| r11 |
| r12 |

| m1 | m2 | m3 | m4 | m9 | m10 | m11 | m12 |

Entzerrer-
Koeffizienten
(reduzierte
Systemmatrix)

$\hat{S}_n$

geschätztes
Symbol
(reduzierte
Systemmatrix)

Fig.4